# EUROPÄISCHE PATENTSCHRIFT

(11) **EP 3 642 527 B1**
(45) Veröffentlichungstag und Bekanntmachung des Hinweises auf die Patenterteilung: **04.08.2021**
(21) Anmeldenummer: 18735218.2
(22) Anmeldetag: 20.06.2018
(51) Int. Cl.: F16L 59/065, E04B 1/80, C09D 175/02

(54) **WÄRMEDÄMMKÖRPER MIT SCHUTZSCHICHT**
THERMAL INSULATION BODY HAVING A PROTECTIVE LAYER
CORPS CALORIFUGE MUNI D'UNE COUCHE PROTECTRICE

(30) Priorität: 21.06.2017 DE 102017113782
(43) Veröffentlichungstag der Anmeldung: 29.04.2020
(73) Patentinhaber: Porextherm-Dämmstoffe GmbH, 87437 Kempten (DE)
(72) Erfinder: RELL, Andreas, 87490 Haldenwang (DE); EBERHARDT, Hans-Frieder, 89537 Giengen/Brenz Burgberg (DE); MÜLLER, Richard, 87509 Immenstadt (DE)
(74) Vertreter: Hoppe, Lars
(86) Internationale Anmeldenummer: PCT/EP2018/066463
(87) Internationale Veröffentlichungsnummer: WO 2018/234397

(56) Entgegenhaltungen:
- CN-A- 101 776 195

## Beschreibung

Die vorliegende Erfindung betrifft einen Wärmedämmkörper mit einer Schutzschicht.

In vielen Bereichen der Technik sind Wärmedämmkörper zu finden, beispielsweise als Hochleistungswärmedämmkörper in der Luft- und Raumfahrt, in der Kraftfahrzeugindustrie, bei Brennstoffzellen, bei temperaturgeregelten Verpackungen und in der allgemeinen und auch der Bauindustrie. Sie werden immer dort eingesetzt, wo es auf geringes Gewicht, geringen Platzbedarf und hochleistungsfähige thermische Dämmung mit sehr steilen Temperaturgradienten ankommt. Diese Wärmedämmkörper sind auch als Vakuum-Isolations-Paneele (VIP) auf dem Markt, deren Dämmeigenschaften um ein Vielfaches über denen von konventionellen Dämmstoffen liegen und ohne weiteres Wärmeleitzahlen von 5 mW/(mK) und darunter erreichen.

Derartige Wärmedämmkörper können problemlos eine Temperaturbeständigkeit von bis zu 1.100° C aufweisen und sind daher für den Einsatz als Hinterisolation in der Stahl-, Aluminium- und Glasindustrie geeignet. Die (Hochleistungs)Wärmedämmformkörper können durchaus komplex geformt sein, um auf engstem Raum und unter schwierigsten Bedingungen Wärme effizient zu dämmen.

Sowohl VIP als auch die Wärmedämmkörper weisen eine Wärmedämmlage auf, die einen Dämmstoff enthält, beispielsweise eine hochdisperse, mikroporöse Kieselsäure und im Falle der VIP auch ein Aerogel, offenzellige Schäume aus Mineralien oder in Form von organischen Hartschäumen oder einen Dämmstoff aus Fasern. Neben diesen Dämmstoffen sind in den unterschiedlichen Wärmedämmkörpern weitere Zusatzstoffe üblich, insbesondere IR-Trübungsmittel, Feuchtigkeitsscavenger, Faserfilamente zur Unterstützung der dreidimensionalen Struktur bei Verwendung hochdisperser Kieselsäure.

Mit Ausnahme der VIP lassen sich die Wärmedämmkörper, bzw. deren Wärmedämmlagen, vergleichsweise einfach mit handelsüblichen Werkzeugen und Maschinen bearbeiten, insbesondere bohren, sägen, fräsen oder schneiden, wobei aufgrund der Staubigkeit des Wärmedämmmaterials pyrogene Kieselsäure eine Staubabsaugung vorhanden sein sollte. Diese starke Staubabgabetendenz ist nicht zuletzt auch dadurch begründet, dass die oftmals verwendete pyrogene Kieselsäure Primärteilchengrößen von 5 bis 50 nm aufweist, sich somit fast gasförmig verhält und lungengängig ist. Selbst die aggregierten Teilchen der Kieselsäure weisen noch Größen von 100 nm bis 100 µm auf. Die Oberflächen von Wärmedämmlagen aus pyrogener Kieselsäure sind aufgrund derer chemischen und physikalischen Eigenschaften als eher empfindlich einzustufen. Ähnliches gilt auch für die Wärmedämmlagen aus den anderen, zuvor genannten Materialien mit Ausnahme der Fasern.

Es ist daher seit langem ein Bestreben, die Oberflächen von Wärmedämmlagen und Wärmdedämmformkörpern zu schützen, was auch für VIP gilt, die bereits zwangsläufig eine Hüllschicht um die Wärmedämmlage aufweisen müssen, da sie ansonsten ihr Vakuum nicht halten könnten.

Aus dem Stand der Technik sind daher eine ganze Reihe von auch mehrlagigen Umhüllungen zum Schutz dieser Wärmedämmkörper, bzw. Wärmedämmlagen bekannt, insbesondere werden für VIP Vliesbeutel verwendet, die ihrerseits in metallisierte Folien, Metallfolienumhüllungen oder Metallhüllen eingeschoben werden, wonach eine Versiegelung, bzw. Verschweißung der Nähte mit ggf. einem Um- und Festlegen der Siegelnähte auf den Hauptflächen des Wärmedämmkörpers erfolgen. Wenn derartige Umhüllungen nicht praktikabel sind, muss das auch hochporöse Dämmmaterial anderweitig vor Abrieb und mechanischer Beschädigung geschützt werden, insbesondere auch vor dem Zutritt von Wasser, welches die Porenstruktur zerstört.

Aus dem Stand der Technik ist es bekannt, mit Fasern versetztes Bitumen als Gießmittel über mikroporöse Wärmedämmlagen zu gießen. Bitumen ist jedoch hochviskos und damit schwer handhabbar. Darüber hinaus dringt Bitumen sehr weit in das Wärmedämmmaterial ein, insbesondere mehr als einen Millimeter, was zu deutlich verschlechterten Dämmeigenschaften führt.

Aus der DE 20 2007 013 688 U1 ist bekannt, Wärmedämmkörper mit einer Umhüllung aus einem Press-, Walz-, Extrusionsschaum- oder Faserwerkstoff zu versehen, insbesondere mit einer Umhüllung aus Kunststoffen oder aus GFK auf Basis von Polyesterharzen oder PA, wobei ggf. Kleber auf Basis von Wasserglas, Kieselsolen oder ähnlichem eingesetzt werden.

Aus der DE 103 08 581 A1 ist für VIP-Unterwasserdämmkörper eine mikroporöse Dämmlage aus gefällter oder pyrogener Kieselsäure bekannt, die mit einer wasserdichten Folie aus einem PU-Elastomer umgeben ist.

Aus der CN 101 776 195 A ist eine wasserdichte Polyharnstoff-Dämmstruktur als Außenschicht auf einem Stahlrohr bekannt, welches auf seiner äußeren Mantelfläche eine FBE-Antikorrosionsschicht trägt. Radial abwärts befinden sich eine Polyurethan-Isolationsschicht und ein Hüllrohr aus HDPE. Eine wasserdichte Polyharnstoffschicht umgibt nahtlos und einstückig nach Art eines Kragens überlappend den axial-radialen-Übergangsbereich von beschichtetem Metallrohr zu umhüllter PU-Wasserdämmschicht.

Aus der GB 2 533 420 A ist ein mit einem elastomeren Material beschichteter Kern bekannt, wobei als Material des Kerns bevorzugt Schaummaterial insbesondere Styropor, PUR-Schaum oder PE-Schaum vorgesehen ist. Als Beschichtung wird unter anderem Polyharnstoff vorgeschlagen. Die Beschichtung ist dabei insbesondere den Kern vollständig umgebend vorgesehen.

Aus dem Bereich der Schutz- und Abdichtschichten von Becken, Tanks, Fassaden, Böden, Fahrbahnen, etc. sind hotspray coatings bzw. Beschichtungen aus Polyharnstoff bekannt, die auch als abriebfeste Schichten in der Industrie und im Baugewerbe eingesetzt werden. Diese sind zugfest mit bis zu 23 N/mm² und elastisch nach DIN 53504 mit bis zu 330%.

Die Erfindung stellt sich die Aufgabe, einen Wärmedämmkörper anzugeben, der eine von einer Deckschicht mindestens teilweise umgebene Wärmdämmlage aufweist.

Diese Aufgabe wird bei einem Wärmedämmformkörper aufweisend eine Wärmdämmlage aus einem oder mehreren Dämmmaterialien und eine Deckschicht, wobei die Deckschicht gebildet ist durch einen Polyharnstoff, erhalten aus einer Polyadditions-Polymerisationsreaktion eines aromatischen oder aliphatischen Isocyanats und einem OH-Gruppen freien Polyamin mit endständiger Aminogruppe, wobei die Deckschicht auf der Wärmedämmlage oder dem Wärmedämmformkörper angeordnet ist und wobei die Deckschicht die Wärmedämmlage oder den Wärmedämmformkörper allseitig umgebend ist, dadurch gelöst, dass das Dämmmaterial einzeln oder als Mischung gewählt ist aus der Gruppe gebildet durch pyrogene Kieselsäure, gefällte Kieselsäure, offenzellige Mineralschäume, Aerogele, Polyurethan-Aerogel, mineralische Fasern, Faserverbunde, Hohlglaskugeln, Vermiculit.

Ein erfindungsgemäßer Wärmedämmformkörper ist in seiner räumlichen Ausgestaltung erfindungsgemäß zunächst nicht beschränkt, er kann daher streifen- und plattenartig oder gebogen zur Umhüllung von Rohrleitungen und anderen räumlich gekrümmten Körpern ausgebildet sein. Die Art der Fläche seiner Oberfläche ist ebenfalls zunächst nicht eingeschränkt, er kann daher eine drei-, vier-, fünf- oder mehreckige (polygone) oder in jeder Form runde Form - von kreisrund über elliptisch, oval oder undefiniert rund- aufweisen. In jedem Fall ist es jedoch ein geformter Körper aus einem oder mehreren der genannten Materialien, wie er in den eingangs genannten technischen Bereichen auch in Form von VIP zur Anwendung kommt. Erfindungsgemäß wird unter Wärmedämmlage die eigentlich wärmedämmende Materiallage des Wärmdedämmkörpers verstanden, die wenigstens ein Dämmmaterial aufweist, insbesondere ein hochdisperses, mikroporöses Wärmedämmmaterial, bevorzugt eine pyrogene oder eine gefällte Kieselsäure. Andere hochdisperse Metalloxide können erfindungsgemäß genauso vorhanden sein, wie weitere Inhaltsstoffe.

Im einfachsten Fall ist der erfindungsgemäße Wärmedämmkörper die Wärmedämmlage aus Dämmmaterial selber. In der Regel wird der erfindungsgemäße Wärmedämmformkörper jedoch aus einer ein- oder mehrlagig umhüllten Wärmedämmlage bestehen, wobei der Wärmedämmformkörper auch weiteres umfassen kann, insbesondere Umhüllungen oder Durchsetzungen wie Ösen und dergleichen mehr, auch Anformungen zu beispielsweise Montagezwecken. Auch kann ein solcher erfindungsgemäßer Wärmedämmkörper mit Umhüllung evakuiert und damit ein VIP sein.

Mit besonders großem Vorteil schlägt die Erfindung nun vor, den Wärmdedämmformkörper oder die Wärmedämmlage mit einer Deckschicht zu versehen, die unmittelbar oder mittelbar an diesen angeordnet und die durch einen Polyharnstoff gebildet ist. Polyharnstoffe sind Elastomere, erhalten aus einer Reaktion eines aromatischen oder aliphatischen, monomeren, polymeren, quasi-prepolymeren oder einem prepolymeren Isocyanats per step-growth Polymerisation mit einem Polyamin mit endständiger Aminogruppe(n) ohne OH-Gruppen im Gerüst. Es handelt sich demnach gerade nicht um ein Polyurethan (PUR oder PU), welches aus einem Diisocyanat und einem Diol erhältlich ist. Derartige zweikomponentige Systeme aus aliphatischen Aminen und Isocyanaten reagieren infolge der hohen Nukleophilie der Amine meist sehr schnell und müssen daher eher nachteilig maschinell mit Zweikomponenten-Mischanlagen verarbeitet werden, wobei die Topfzeiten sich im Bereich von Sekunden bewegen. Polyharnstoffe weisen wie geschildert gute bis sehr gute Chemikalienbeständigkeit sowie hohe Elastizität und Reißfestigkeit auf. Diese hohe Elastizität und Reißfestigkeit sowie die damit verbundene Selbstheilungskraft bei Rissen, Schnitten oder Einstichen kommt überraschenderweise gerade bei Wärmedämmformkörpern mit großem Vorteil zum Tragen, die entweder als VIP ausgebildet sind oder um Rohre oder andere feste Körper gelegt sind und die bevorzugt in-situ mit dieser Deckschicht versehen werden. Derartige Wärmedämmformkörper sind überraschenderweise gerade fest genug, um die Vorteile des Deckschichtmaterials zur Geltung zu bringen: sie werden von diesem beim Aushärten zusammengezogen/zusammengepresst und so fest an den zu dämmenden Körper gedrückt, so dass die Dämmung besonders gut erfolgen kann. Wären die Wärmedämmformkörper starrer, beispielsweise Beton- oder Stahlteile, so würde diese zusammenziehende Wirkung der Deckschicht wirkungslos sein, wären sie wesentlich weicher, so würden sie durch die Deckschicht über Gebühr verformt. Gerade die VIP werden und sind aufgrund ihrer Evakuierung mit 1 bar gepresst und entsprechend steif. Darüber hinaus führt diese Eigenschaft der erfindungsgemäß als Deckschicht eingesetzten Polyharnstoffe dazu, dass eine aus diesem Material bestehende Deckschicht auch einheitlich auf alle solche Körper aufbringbar ist, deren chemische und physikalische Eigenschaften eine solche unmittelbare Beschichtung erschweren oder je nach Körpermaterial unterschiedliche Deckschichten erfordern. Dies liegt vor allem daran, dass diese erfindungsgemäße Deckschicht sich gleichsam von selber um den Körper spannt und so eine dauerhafte Decksicht ergibt. Damit erweist sich die aus anderen Bereichen der Technik bekannte Polyharnstoffdeckschicht für den erfindungsgemäßen Einsatz als überraschend geeignet, auch wegen ihrer hier bedeutsamen Permeationsdichtheit für Wasserdampf.

Erfindungsgemäß ist diese Deckschicht nicht chemisch, oder allgemein stoffschlüssig, mit der Wärmedämmlage bzw. dem Wärmedämmformkörper verbunden ausgebildet, vielmehr hält sie aufgrund physikalischer Wechselwirkungen, so dass sich gesonderte coatings, Haftvermittlerschichten oder dergleichen zwischen der Deckschicht und der Wärmedämmlage bzw. dem Wärmedämmformkörper erübrigen. Dies ermöglicht mit großem Vorteil ein einfaches in-situ Aufbringen der Deckschicht auf einen Wärmedämmformkörper an dessen Einbauort, beispielsweise einem gerade eben gedämmten Rohrstrang. Die Deckschicht im Rohzustand wird warm aufgetragen, insbesondere gestrichen, gepinselt oder gesprüht und härtet vor Ort nach kürzester Zeit aus. Diese einfache Aufbringungsart ermöglicht das Vorsehen einer Deckschicht unabhängig davon, ob ein umhülltes VIP, ein umhüllter oder nicht umhüllter Wärmedämmformkörper oder eine umhüllte oder nicht umhüllte Wärmedämmlage selber mit der Deckschicht versehen werden sollen. Erfindungsgemäß ist natürlich auch ein Wärmedämmformkörper, der bereits ab Werk mit dieser Deckschicht versehen ist.

Erfindungsgemäß ist vorgesehen, dass die Deckschicht die Wärmedämmlage oder den Wärmedämmformkörper allseitig umgebend ist.

Erfindungsgemäß ist das im Wärmedämmkörper eingesetzte Dämmmaterial einzeln oder als Mischung gewählt aus der Gruppe gebildet durch pyrogene Kieselsäure, gefällte Kieselsäure, offenzellige Mineralschäume, Aerogele, Polyurethan-Aerogel, mineralische Fasern, Faservebunde, Hohlglaskugeln, Vermiculit. Hierbei ist Kieselsäure bevorzugt. Diese ist jedoch besonders schwierig zu beschichten, da zu niedrig viskoses Deckschichtmaterial die Struktur der Kieselsäure zerstört, indem sie zu tief eindringt und viskoseres Deckschichtmaterial schlecht auftragbar ist.

Weist die Deckschicht in Weiterbildung der Erfindung eine einheitliche oder variable Schichtdicke zwischen 0,1 mm und 5 mm auf, so ist sie besonders dazu geeignet, auch in sehr rauen Einsatzumgebungen lange Standzeiten des Wärmedämmformkörpers zu ermöglichen. Bevorzugt sind einheitliche Schichtdicken auf dem Wärmedämmformkörper, jedenfalls mindestens pro einer Seite eines Wärmedämmformkörpers, jedoch können erfindungsgemäß dessen im Einsatzfall minderbelastete Seiten auch mit einer geringeren Schichtdicke versehen sein als die höher belasteten. Besonders bevorzugt sind Schichtdicken zwischen 1 mm und 3 mm, Grenzen inbegriffen.

Mit besonders großem Vorteil ist erfindungsgemäß vorgesehen, dass die Deckschicht unmittelbar auf der Wärmedämmschicht angeordnet ist. Ein solcher unmittelbarer Auftrag, also ohne Vermittlung weiterer Schichten oder Materiallagen ist herstellungstechnisch besonders einfach. Überraschenderweise spannt sich die Deckschicht um den Körper, insbesondere dann, wenn sie kantenübergreifend ausgebildet ist, und drückt diesen damit zumindest ein wenig zusammen. Das gleiche Verhalten zeigt sich bei den VIP, jedoch ist hier die erfindungsgemäße Deckschicht zwangsläufig nicht unmittelbar auf der Wärmedämmschicht angeordnet, da ein VIP mindestens eine Umhüllung aufweist, um das Vakuum zu halten.

Alternativ hierzu ist erfindungsgemäß vorgesehen, dass zwischen Deckschicht und Wärmedämmschicht eine Materiallage angeordnet ist, insbesondere eine netzartige Materiallage und/oder eine Folie. Diese Ausgestaltung erfasst auch die VIP, bei denen die Deckschicht unmittelbar auf die Umhüllung aufgetragen wird, genauso, wie die Wärmedämmköper, die keine solche Umhüllungen aufweisen. Die Materiallage kann eine Glasfaserlage, ein Vlies oder ein Gewebe sein, insbesondere auch eine Mischung daraus, wobei als Materialien der Materiallage insbesondere anorganische Materialien erfindungsgemäß sind. Ebenso kann sie eine Folie sein oder eine lagenweise geschichtete Kombination aus beiden. Als zwischen Wärmedämmkörper und Deckschicht angeordnete Materiallage wäre auch eine Primer-Schicht erfindungsgemäß.

Weiter ist vorgesehen, dass die Deckschicht wenigstens einen flammenhemmenden Bestandteil aufweist. Dieser ist erfindungsgemäß durch die üblichen Flammhemmer gebildet.

Bei einem Herstellverfahren für den beschriebenen Wärmedämmformkörper wird die Deckschicht in Rohform - also insbesondere als 2K-Gemisch - auf den in Verwendungslage eingebauten Wärmedämmformkörper in-situ aufgebracht, insbesondere gepinselt, gespritzt oder gesprüht und dort ausgehärtet, wobei das Auftragen insbesondere mit einer Rohdeckschicht bei höherer Temperatur erfolgt, insbesondere bei ca 80°C. Diese hohe Temperatur führt zu sehr kurzen Reaktionszeiten und damit zu einer fast instantanen Aushärtung und damit zu einer erfindungsgemäßen Deckschicht, die den Wärmedämmformkörper deutlich zusammen- und damit auf den gedämmten Körper presst. Diese erhöhte Temperatur wird bevorzugt aus der Exothermie der Aushärtereaktion der beiden Komponenten erreicht, sie kann jedoch erfindungsgemäß auch durch externe Wärmezufuhr erreicht werden, falls die Exothermie nicht ausreichend sein sollte. Bevorzugt wird hierbei im 2K-Gemisch erfindungsgemäß ein Verhältnis von ca. 1:1 zwischen der Aminkomponente und der Härterkomponente gewählt.

Zu diesem Herstellverfahren gehört auch eine Variante, bei der um den oder Teile des Wärmedämmformkörpers ein Glasgewebe oder ein Vlies oder eine Folie aufgelegt und dieses dann mit der Rohdeckschicht beaufschlagt wird. Die ersten beiden genannten Schichten ermöglichen mit Vorteil ein Einfangen von aus dem Dämmmaterial austretendem Gas, welches ansonsten durch Blasenbildung die Homogenität und damit Wirkung der Deckschicht verringern würde. Die letztgenannte Schicht ist insbesondere bei VIP vorhanden, sie verhindert einen Luftzutritt.

In einem weiteren Herstellverfahren werden die erfindungsgemäßen Wärmedämmformkörper bereits im Werk gefertigt, wobei hier neben einem Sprühen auch das Tauchen des mit Deckschicht zu versehenden Wärmedämmformkörpers in ein erwärmtes Roh-Deckschichtfluid angewendet wird. Die Härtung erfolgt auch hier bei erhöhten Temperaturen, insbesondere zwischen 70°C und 80°C. Der Auftrag erfolgt dabei so, dass die Oberfläche der Dämmlage und damit das Dämmmaterial nicht mechanisch gestört wird, insbesondere ist ein langsamer Auftrag vorteilhaft, um die Dämmwirkung herabsetzende Lufteinschlüsse zu vermeiden. Bevorzugt wird die Rohdeckschicht mittels Sprühen aufgetragen, da so die Mischung der beiden Reaktanden zielgerichtet unmittelbar vor dem Auftrag erfolgen kann, so dass die kurzen Topfzeiten eingehalten werden können.

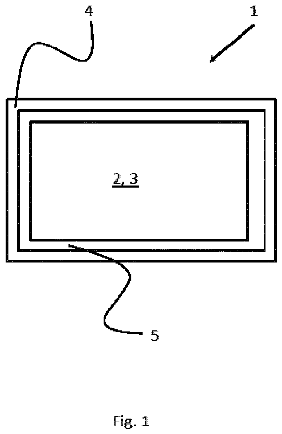

**Fig. 1** zeigt eine schematische Ansicht eines erfindungsgemäßen Wärmedämmformkörpers 1. Dieser weist in seinem Inneren eine Wärmedämmlage 2 aus einem Wärmedämmmaterial 3 auf, beispielsweise ein Körper aus gefällter oder pyrogener Kieselsäure. Um diese Wärmedämmlage herum ist hier allseitig eine Materiallage 5 angeordnet, bei diesem Ausführungsbeispiel vollständig um die gesamte Oberfläche der Wärmedämmlage 2. Diese Ausführungen gelten unmittelbar für rechteckige Wärmedämmformkörper, in gleichem Maße jedoch auch für anders geformte. Nicht dargestellt sind übliche Zusätze, wie Durchgangsöffnungen, Verankerungshilfen, Falznähte oder dergleichen mehr.

Die geschilderte Erfindung verbindet überraschend die physikalischen und chemischen Eigenschaften einer Polyharnstoffschicht mit denjenigen von Wärmedämmformkörpern, seien sie evakuiert oder nicht, seien sie umhüllt oder aus einer Wärmedämmlage aus einem Dämmmaterial alleine bestehend, so dass eine Vielzahl unterschiedlich ausgebildeter Wärmedämmformkörper mit nur einer einzigen Deckschichtart mechanisch widerstandsfähiger machbar sind und gleichzeitig auch besser einsetzbar, da sie aufgrund ihrer für den Polyharnstoff gerade richtigen Steifigkeit dessen Vorteil besonders gut zur Geltung bringen, das Material, auf dem es aufgetragen ist, zusammenzuziehen. Damit sind erfindungsgemäße Wärmedämmformkörper als Rohrisolierungen genauso gut einsetzbar wie als isolierende Beläge von Kraftfahrzeugladeflächen, als mechanisch geschützte Innenwände von thermischen Isolationsbehältern.

### BEZUGSZEICHENLISTE

- 1: Wärmedämmformkörper
- 2: Wärmedämmlage
- 3: Dämmmaterial
- 4: Deckschicht
- 5: Materiallage

## Patentansprüche

1. Wärmedämmformkörper (1) aufweisend eine Wärmdämmlage (2) aus einem oder mehreren Dämmmaterialien (3) und eine Deckschicht (4), wobei die Deckschicht (4) gebildet ist durch einen Polyharnstoff, erhalten aus einer Polyadditions-Polymerisationsreaktion eines aromatischen oder aliphatischen Isocyanats und einem OH-Gruppen freiem Polyamin mit endständiger Aminogruppe, wobei die Deckschicht (4) auf der Wärmedämmlage (2) oder dem Wärmedämmformkörper (1) angeordnet ist und wobei die Deckschicht (4) die Wärmedämmlage (2) oder den Wärmedämmformkörper (1) allseitig umgebend ist, **dadurch gekennzeichnet, dass** das Dämmmaterial (3) einzeln oder als Mischung gewählt ist aus der Gruppe gebildet durch pyrogene Kieselsäure, gefällte Kieselsäure, offenzellige Mineralschäume, Aerogele, Polyurethan-Aerogel, mineralische Fasern, Faservebunde, Hohlglaskugeln, Vermiculit.

2. Wärmedämmkörper (1) nach Anspruch 1, **dadurch gekennzeichnet, dass** die Deckschicht (4) eine einheitliche oder variable Schichtdicke zwischen 0,1 mm und 5 mm, insbesondere zwischen 1 mm und 3 mm aufweist.

3. Wärmedämmkörper (1) nach Anspruch 1 oder 2 **dadurch gekennzeichnet, dass** die Deckschicht (4) unmittelbar auf der Wärmedämmlage (2) angeordnet ist.

4. Wärmedämmkörper (1), nach Anspruch 1, 2 oder 3, **dadurch gekennzeichnet, dass** zwischen Deckschicht (4) und Wärmedämmlage (2) eine Materiallage (5) angeordnet ist, insbesondere eine netzartige Materiallage (5) und/oder eine Folie.

5. Wärmedämmkörper (1), nach einem der vorhergehenden Ansprüche **dadurch gekennzeichnet, dass** die netzartige Materiallage (5) ein Gewebe, ein Gewirk oder ein Vlies oder ein Gemisch aus diesen ist, insbesondere ein Glasfasermaterial aufweist.

6. Wärmedämmkörper (1), nach einem der vorhergehenden Ansprüche **dadurch gekennzeichnet, dass** die Deckschicht (4) wenigstens einen flammenhemmenden Bestandteil aufweist.

## Claims

1. A molded thermal insulation body (1) comprising a thermal insulation layer (2) made from one or more insulation materials (3) and a cover layer (4), wherein the cover layer (4) is formed by a polyurea obtained from a polyaddition polymerization reaction of an aromatic or aliphatic isocyanate and an OH group-free polyamine having a terminal amino group, wherein the cover layer (4) is disposed on the thermal insulation layer (2) or the molded thermal insulation body (1) and wherein the cover layer (4) surrounds the thermal insulation layer (2) or the molded thermal insulation body (1) on all sides, **characterized in that** the insulation material (3), as a single material or a blend, is selected from the group formed by pyrogenic silica, precipitated silica, open-cell mineral foams, aerogels, polyurethane aerogel, mineral fibers, fiber composites, hollow glass spheres, vermiculite.

2. The thermal insulation body (1) according to claim 1, **characterized in that** the cover layer (4) has a uniform or variable layer thickness between 0.1 mm and 5 mm, in particular between 1 mm and 3 mm.

3. The thermal insulation body (1) according to claim 1 or 2, **characterized in that** the cover layer (4) is disposed directly on the thermal insulation layer (2).

4. The thermal insulation body (1) according to claim 1, 2 or 3, **characterized in that** a material layer (5), in particular a mesh-like material layer (5) and/or a film, is disposed between the cover layer (4) and the thermal insulation layer (2).

5. The thermal insulation body (1) according to any one of the preceding claims, **characterized in that** the mesh-like material layer (5) is a woven fabric, a knitted fabric or a fiber mat or a mixture thereof.

6. The thermal insulation body (1) according to any one of the preceding claims, **characterized in that** the cover layer (4) comprises at least one flame-retarding component.

## Revendications

1. Corps calorifuge (1) comportant une couche calorifuge (2) dans un ou plusieurs matériaux isolants (3) et une couche de couverture (4), sachant que la couche de couverture (4) est formée par un polycarbamide, obtenu par une réaction polyaddition- polymérisation d'un isocyanate aromatique ou aliphatique et une polyamine exempte de groupes oxhydriles (OH) avec un groupe aminé en fin de chaîne, sachant que la couche de couverture (4) est disposée sur la couche calorifuge (2) ou sur le corps calorifuge (1) et sachant que la couche de couverture (4) entoure de tous côtés la couche calorifuge (2) ou le corps calorifuge (1), **caractérisé en ce que** le matériau isolant (3) est choisi individuellement ou en tant que mélange à partir du groupe formé par de l'acide silicique pyrogène, de l'acide silicique précipité, de la mousse minérale à alvéoles ouvertes, des aérogels, d'aérogel de polyuréthane, de fibres minérales, de matériaux composites renforcés par des fibres, des billes de verre creuses, de la vermiculite.

2. Corps calorifuge (1) selon la revendication 1, **caractérisé en ce que** la couche de couverture (4) comporte une épaisseur de couche uniforme ou variable entre 0,1 mm et 5 mm, en particulier entre 1 mm et 3 mm.

3. Corps calorifuge (1) selon la revendication 1 ou 2, **caractérisé en ce que** la couche de couverture (4) est directement disposée sur la couche calorifuge (2).

4. Corps calorifuge (1) selon la revendication 1, 2 ou 3, **caractérisé en ce qu'**une couche de matériau (5) est disposée entre la couche de couverture (4) et la couche calorifuge (2), en particulier une couche de matériau réticulaire (5) et/ou un film.

5. Corps calorifuge (1) selon l'une quelconque des revendications précédentes, **caractérisé en ce que** la couche de matériau réticulaire (5) est un tissu, un produit maillé, un produit non-tissé ou un mélange de ceux-ci, comporte en particulier un matériau à base de fibres de verre.

6. Corps calorifuge (1) selon l'une quelconque des revendications précédentes, **caractérisé en ce que** la couche de couverture (4) comporte au moins un composant ignifuge.
